# EUROPEAN PATENT SPECIFICATION

(11) **EP 3 140 133 B1**
(45) Date of publication and mention of the grant of the patent: **14.03.2018**
(21) Application number: 15728662.6
(22) Date of filing: 06.05.2015
(51) Int. Cl.: B60C 9/22, B60C 9/18, B60C 9/20

(54) **A CAP PLY REINFORCEMENT STRIP FOR PNEUMATIC TIRES**
DECKLAGENVERSTÄRKUNG FÜR LUFTREIFEN
BANDE DE RENFORT DE NAPPE DE SOMMET POUR PNEUMATIQUES

(30) Priority: 06.05.2014 TR 201405069
(43) Date of publication of application: 15.03.2017
(73) Proprietor: Kordsa Global Endustriyel Iplik ve Kord Bezi Sanayi ve Ticaret Anonim Sirketi, 41310 Kocaeli (TR)
(72) Inventor: AKSOY, Kürsat, 41310 Kocaeli (TR); GUNER, Evren, 41310 Kocaeli (TR); TAMER, Ayse Hande, 41310 Kocaeli (TR); FIDAN, Sadettin, 30827 Garbsen (DE)
(74) Representative: Dericioglu Kurt, Ekin
(86) International application number: PCT/TR2015/000192
(87) International publication number: WO 2015/171093

(56) References cited:
- EP-A1- 2 098 385
- WO-A1-2011/112356
- WO-A1-2012/063180

## Description

### Field of the Invention

The present invention relates to a cap ply reinforcement strip which is ready to use plain woven, which is comprised of cord or twisted yarns as warp and yarn with high linear density as weft, and which is in direct contact with the tread rubber in pneumatic radial tires.

### Background of the Invention

In radial tires, it is known that the cap ply reinforcement strip, which is wound on the belt package by making a small angle with the equatorial plane in order to form a cap ply, improves performance of the radial tire especially at high speeds.

Winding nylon 6.6, PET (polyethylene terephthalate), hybrid (Aramide+Nylon 5.5, Aramide+PET) cords spirally as cap ply reinforcement layer on the belt package as strips has been applied for many years by several tire companies in order to improve high speed durability and handling performance in pneumatic radial tires. The said cord strips are obtained by cutting calendered (rubberized) cord fabric in strips or rubberizing parallel single cords in a certain width during extrusion process without weft.

In current embodiments, weft yarns with low linear density (100-300 dtex) which do not have any effect on tire performance in cap ply reinforcement strips are used, and the only purpose for using these is to hold the warp yarns or cords together as parallel to each other.

WO2012/063180 is also known in the prior art.

The wefts having higher linear density used in some embodiments do not have any effect on the tire performance due to not being able to form any elevation or protrusion on the strip surface since they remain between the leno woven warps(US 7,252,129). Wefts are not used at all in cap ply reinforcement strips prepared with extrusion process.

### Summary of the Invention

The objective of the present invention is to provide a cap ply reinforcement strip which is obtained by plain weaving the warps with the texturized weft yarns with high linear density for pneumatic radial tires.

Another objective of the present invention is to provide a cap ply reinforcement strip which reduces the tread wearing, rolling resistance and braking distance of the pneumatic radial tire by means of the weft yarns comprised therein.

### Detailed Description of the Invention

"Cap ply reinforcement strip for pneumatic tires" developed to fulfill the objective of the present invention is illustrated in the accompanying figures wherein,

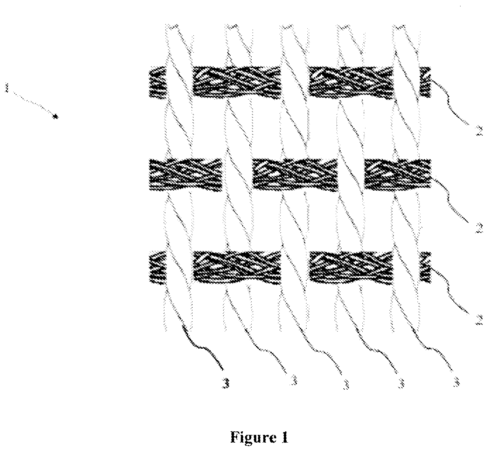

Figure 1 is the zoomed, top view of the cap ply reinforcement strip.
   Figure 2 is the deformation direction of the tire tread in time of contact with the road in a moving vehicle and the resistance of the weft yarns against this deformation.
Figure 3 is the deformation direction of the tire tread in time of contact with the road in a braking vehicle and the resistance of the weft yarns against this deformation.

The components given in the figure are numbered and the numbers refer to the following:
1. Cap ply reinforcement strip
2. Weft yarn
3. Warp
A direction of vehicle's movement
L. Direction of tire's rotation
D. Direction of tread's deformation

The inventive cap ply reinforcement strip (1) comprises
- a plurality of texturized weft yarns (2) parallel to each other the linear density of which changes between 1400 and 6000 dtex, and
- a plurality of warps (3) parallel to each other which are fixed to weft yarns (2) by being plain woven such that they will form a right angle on horizontal plane to the weft yarns.

The inventive cap ply reinforcement strip (1) is wound on the belt package on the tire spirally such that there will be a 0 to 5° degree angle with equatorial plane of the tire and it is in direct contact with the tread rubber.

The inventive cap ply reinforcement strip (1), which eliminates calendaring and strip preparing stages and enables to reduce rolling resistance of the tire and the fuel consumption by avoiding the requirement for rubber coating thereon, comprises an adhesive dip on its outer surface that is required for tire production process.

In the preferred embodiment of the invention, the weft yarns (2) and the warps are fixed to each other with adhesive dipping material, and thus a strong bond is formed on contact points of the weft yarn (2) and the warps (3) and warp (3) in the strip (1) is prevented from shifting aside and separating. The adhesive material used in one embodiment of the invention is RFL (Resorcinol Formaldehyde Latex).

In one embodiment of the invention, the weft yarns (2) and the warps (3) are adhered to each other with dipping process for preparing the cap ply reinforcement strip (1), and then the strip (1) is optionally cemented with rubber solution, and the physical adherence of its surface is improved.

The weft yarns (2) in the plain woven cap ply reinforcement strip (1) form regular elevations at contact points with warps (3) on the lower and upper surfaces of the strip (1). These weft elevations are embedded into the tread rubber in the tire and thus increase the resistance of the tread against deformation.

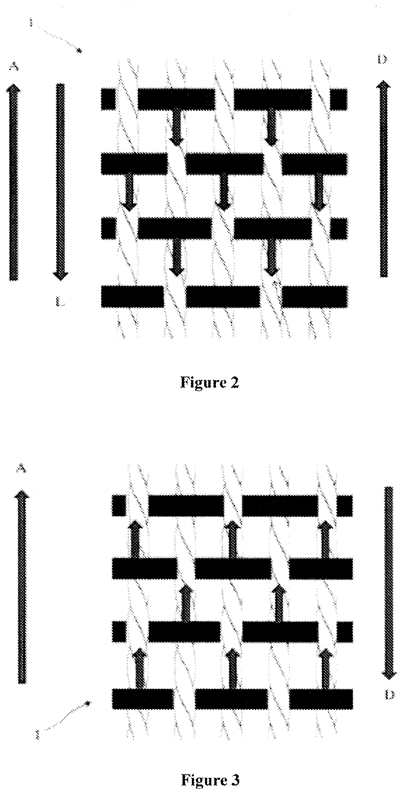

Since the said improved resistance of tread area against deformation increases the efficiency of force transfer between the road surface and the tire, it reduces the rolling resistance and tread wearing of the tire (Figure 2). On the other hand, in case a vehicle moving at high speed brakes, due to the effective force transfer between the road surface and the tire in which the inventive cap ply reinforcement strip (1) is used, the vehicle can stop in shorter distance than normal. This is a factor which increases the safety of the vehicle (Figure 3).

The texturized weft yarns (2) absorb the adhesive material more easily due to their texturized structure, this increases the resistance and stability of cap ply reinforcement strip (1) in the tire under dynamic conditions. Another advantage provided with the inventive cap ply reinforcement strip (1) is that the noise originating from the tread deformation is reduced. In case of using texturized weft yarns, the amount of the adhesive dip in the cap ply reinforcement strip is between 5% to 80%, preferably 8% to 40 or more preferably 10% to 25%.

Aside from chemical adhesion, mechanical interlocking between the cap ply reinforcement strip (1) and the tread formed by the weft elevations prevents the tread from separating from the cap ply reinforcement strip (1) at high speeds. This especially has great importance for radial aircraft tire.

The width of the inventive cap ply reinforcement strip (1) varies between 5 to 30mm, preferably 8 to 15mm. The number of warps (3) present in the 10 mm width of the cap ply reinforcement strip (1) may vary between 3 to 20. The cord twist degrees of warps (3) are between 100 to 800 twist/meter (tpm), preferably 250 to 350 tpm.

The warps (3) used in the inventive cap ply reinforcement strip (1) can be comprised of hybrid cords such as PET-nylon 6.6, aramide-nylon 6.6 or aramide-PET as well as it can be comprised of nylon 6.6, PET (polyethylene terephthalate), aramide cords.

The cords used in warps (3) can comprise 2 to 7 nylon 6.6, PET or monofilaments of both the diameters of which are 0.1 to 1 mm.

The weft yarns (2) are manufactured from at least one material selected from the group comprising nylon 6.6, nylon 4.6, nylon 6, PET (polyethylene terephthalate), PEN (polyethylene naphthalate) or rayon.

The linear densities of the weft yarns (2) can vary between 1400 to 6000 dtex, preferably 1400 to 3000 dtex. The weft yarns (2) used as weft can be twisted or non-twisted. The number of texturized weft yarns (2) in a 10 cm long strip (1) can be 5 to 50, preferably 10 to 20.

## Claims

1. A pneumatic radial tire having a cap ply reinforcement strip (1), which is wound on the belt package in the tire spirally having 0 to 5° degrees with the equatorial plane and in direct contact with the tread rubber, **comprises** a plain weave strip having a plurality of parallel weft yarns (2), a plurality of parallel warps (3) **characterized in that,** linear densities of said weft yarns (2) of said cap ply reinforcement strip (1) are at least 1400 dtex wherein said weft yarns (2) form regular elevations at contact points with said warps (3) on the lower and upper surfaces of said cap ply reinforcement strip (1) and which are embedded into said tread rubber.

2. A pneumatic radial tire having a cap ply reinforcement strip (1) according to claim 1, **characterized in that** said weft yarns (2) are texturized.

3. A pneumatic radial tire having a cap ply reinforcement strip (1) according to claim 1, **characterized in that** said warps (3) are yarns or cords.

4. A pneumatic radial tire having a cap ply reinforcement strip (1) according to claim 1 to 3, **characterized in that** said weft yarns (2) and said warps (3) are fixed to each other with an adhesive dipping material, which forms a strong bond at the contact points of said weft yarns (2) and the warps (3).

5. A pneumatic radial tire having a cap ply reinforcement strip (1) according to claim 4, **characterized in that** said adhesive material is RFL (Resorcinol Formaldehyde Latex).

6. A pneumatic radial tire having a cap ply reinforcement strip (1) according to any one of the claims 4 to 5, **characterized in that** said cap ply reinforcement strip (1) is cemented with rubber solution after said weft yarns (2) and the warps (3) are adhered to each other.

7. A pneumatic radial tire having a cap ply reinforcement strip (1) according to any one of the preceding claims, **characterized in that** width of said cap ply reinforcement strip (1) is between 5 to 30 mm.

8. A pneumatic radial tire having a cap ply reinforcement strip (1) according to claim 7, **characterized in that** width of said cap ply reinforcement strip (1) is between 8 to 15 mm.

9. A pneumatic radial tire having a cap ply reinforcement strip (1) according to preceding claims, **characterized in that** number of said warp (3) is between 3 to 20 wherein width of said cap ply reinforcement strip (3) is 10 mm.

10. A pneumatic radial tire having a cap ply reinforcement strip (1) according to claim 9, **characterized by** the cord twisting degree of said warp (3) is between 250 and 350 tpm.

11. A pneumatic radial tire having a cap ply reinforcement strip (1) according to any one of the preceding claims, **characterized in that** the linear densities of said weft yarns (2) are between 1400 to 6000 dtex.

12. A pneumatic radial tire having a cap ply reinforcement strip (1) according to any one of the preceding claims, **characterized by** said weft yarn (2) which is manufactured from at least one material selected from the group comprising nylon 6.6, nylon 4.6, nylon 6, PET (polyethylene terephthalate), PEN (polyethylene naphthalate) or rayon.

13. A pneumatic radial tire having a cap ply reinforcement strip (1) according to any one of the preceding claims, **characterized by** the number of said weft yarn (2) is between 5 to 50 wherein in the length of said cap ply reinforcement strip (1) is 10 cm.

14. A pneumatic radial tire having a cap ply reinforcement strip (1) according to any one of the preceding claims, **characterized by** said warps (3) which are comprised of nylon 6.6, PET (polyethylene terephthalate), aramide cords or hybrid cords such as PET-nylon 6.6, aramide-nylon 6.6 or aramide-PET.

## Patentansprüche

1. Ein Radialluftreifen aufweisend einen Gürtelverstärkungsstreifen (1), der die spiralförmig mit einem Winkel von 0 bis 5° mit der Äquatorialebene auf der Gürtelpackung des Reifens gewickelt ist und direkt mit dem Trägergummi in Kontakt steht, auf eine Mehrzahl von parallelen Schußfäden (2), eine Mehrzahl von parallelen Ketten (3) aufweist, **dadurch gekennzeichnet dass,** die lineare Dichte der besagten Schussfäden (2) des besagten Gürtelverstärkungsstreifens (1) mindestens 1400 dtex beträgt, wobei die besagten Kettfäden (3) regelmäßige Erhebungen an den Kontaktpunkten mit den Unter-, und Oberflächen des besagten Gürtelverstärkungsstreifens (1) und die besagten Schussfäden (2) formen, die in den Trägergummi eingebettet sind.

2. Ein Radialluftreifen aufweisend einen Gürtelverstärkungsstreifen (1) nach Anspruch 1, **dadurch gekennzeichnet dass,** die besagten Schußfäden (2) texturiert sind.

3. Ein Radialluftreifen aufweisend einen Gürtelverstärkungsstreifen (1) nach Anspruch 1, **dadurch gekennzeichnet dass,** die besagten Kettfäden (3) aus Garn oder Kord bestehen.

4. Ein Radialluftreifen aufweisend einen Gürtelverstärkungsstreifen (1), nach Anspruch 1 bis 3 **dadurch gekennzeichnet dass,** die besagten Schußfäden (2) und die besagten Kettfäden (3) an Kontaktpunkten der besagten Schußfäden (2) mit den besagten Kettfäden (3) mittels eines Klebstoffes, der eine starke Bindung herstellt, miteinander befestigt sind.

5. Ein Radialluftreifen aufweisend einen Gürtelverstärkungsstreifen (1) nach Anspruch 4, **dadurch gekennzeichnet dass,** der besagte Klebstoff aus RFL (Resorcinol Formaldehyde Latex) ist.

6. Ein Radialluftreifen aufweisend einen Gürtelverstärkungsstreifen (1) nach einem der Ansprüche 4 bis 5, **dadurch gekennzeichnet dass,** der Gürtelverstärkungsstreifen (1) mittels einer Gummilösung, nach dem die besagten Schußfäden (2) und die besagten Kettfäden (3) miteinander geklebt sind, zementiert ist.

7. Ein Radialluftreifen aufweisend einen Gürtelverstärkungsstreifen (1) nach einem der vorangehenden Ansprüche **dadurch gekennzeichnet dass,** die Breite des besageten Gürtelverstärkungsstreifens (1) zwischen 5 mm bis 30 mm beträgt.

8. Ein Radialluftreifen aufweisend einen Gürtelverstärkungsstreifen (1) nach Anspruch 7, **dadurch gekennzeichnet dass,** die Breite des besageten Gürtelverstärkungsstreifens (1) zwischen 8 bis 15 mm beträgt.

9. Ein Radialluftreifen aufweisend einen Gürtelverstärkungsstreifen (1) nach einem der vorangehenden Ansprüche, **dadurch gekennzeichnet dass,** die Anzahl des besagten Kettfadens (3) zwischen 3 bis 20 ist, wobei die Breite des besagten Gürtelverstärkungsstreifen (3) 10 mm beträgt.

10. Ein Radialluftreifen aufweisend einen Gürtelverstärkungsstreifen (1) nach Anspruch 9, **dadurch gekennzeichnet, dass** der Kordeldrehungsgrad des besagten Kettfadens (3) zwischen 250 und 350 tpm beträgt.

11. Ein Radialluftreifen aufweisend einen Gürtelverstärkungsstreifen (1) nach einem der vorangehenden Ansprüche, **dadurch gekennzeichnet dass,** die lineare Dichten der besagten Schußfäden (2) zwischen 1400 bis 3000 dtex beträgt.

12. Ein Radialluftreifen aufweisend einen Gürtelverstärkungsstreifen (1) nach einem der vorangehenden Ansprüche, **dadurch gekennzeichnet dass,** die besagten Schußfäden (2), die mindestens aus einem Material, die der Gruppe von Nylon 6.6, Nylon 4.6, Nylon 6, PET (Polyethylenterephthalat), PEN (Polyethylennaphthalat) oder Rayon gehört, hergestellt sind.

13. Ein Radialluftreifen aufweisend Gürtelverstärkungsstreifen (1) nach einem der vorangehenden Ansprüche, **dadurch gekennzeichnet, dass** die Anzahl der besagten Schußfäden (2) zwischen 5 bis 50 ist, wobei die Länge des Gürtelverstärkungsstreifen (1) 10 cm beträgt.

14. Ein Radialluftreifen aufweisend einen Gürtelverstärkungsstreifen (1) nach einem der vorhergehenden Ansprüche, **dadurch gekennzeichnet, dass** die besagten Kettfäden (3) auf Nylon 6.6, PET (Polyethylenterephthalat), Aramidcord oder Hybridkordel wie PET-Nylon 6.6, Aramid-Nylon 6.6 oder Aramid-PET-Hybridcord aufweisen.

## Revendications

1. Pneumatique à carcasse radiale ayant une bande de renfort de nappe de sommet (1), qui est enroulée sur l'ensemble ceinture dans la carcasse ayant en spirale de 0 à 5° degrés avec le plan équatorial et en contact direct avec le caoutchouc de la gomme de bande de roulement, **comprend** une bande d'armure toile ayant une pluralité de fils de trame parallèles (2), une pluralité de chaînes parallèles (3) **caractérisé en ce que** les densités linéaires desdits fils de trame (2) de ladite bande de renfort de nappe de sommet (1) sont au moins de 1400 dtex dans lequel lesdits fils de trame (2) forment des élévations régulières aux points de contact avec lesdites chaînes (3) sur les surfaces inférieure et supérieure de ladite bande de renfort de couche de recouvrement (1) et qui sont noyées dans ladite gomme de bande de roulement.

2. Pneumatique à carcasse radiale ayant une bande de renfort de nappe de sommet (1) selon la revendication 1, **caractérisé en ce que** lesdits fils de trame (2) sont texturés.

3. Pneumatique à carcasse radiale ayant une bande de renfort de nappe de sommet (1) selon la revendication 1, **caractérisé en ce que** lesdites chaînes (3) sont des fils ou des cordes.

4. Pneumatique à carcasse radiale ayant une bande de renfort de nappe de sommet (1) selon les revendications 1 à 3, **caractérisé en ce que** lesdits fils de trame (2) et lesdites chaînes (3) sont fixés l'un à l'autre avec un matériau de trempage adhésif, qui forme une liaison forte aux points de contact desdits fils de trame (2) et des chaînes (3).

5. Pneumatique à carcasse radiale ayant une bande de renfort de nappe de sommet (1) selon la revendication 4, **caractérisé en ce que** ledit matériau adhésif est du RFL (Resorcinol Formaldehyde Latex).

6. Pneumatique à carcasse radiale ayant une bande de renfort de nappe de sommet (1) selon l'une quelconque des revendications 4 à 5, **caractérisé en ce que** ladite bande de renfort de nappe de sommet (1) est cimentée avec une solution de caoutchouc après lesdits fils de trame (2) et les chaînes (3) sont collés les uns aux autres.

7. Pneumatique à carcasse radiale ayant une bande de renfort de nappe de sommet (1) selon l'une quelconque des revendications précédentes, **caractérisé en ce que** la largeur de ladite bande de renfort de nappe de sommet (1) est comprise entre 5 à 30 mm.

8. Pneumatique à carcasse radiale ayant une bande de renfort de nappe de sommet (1) selon la revendication 7, **caractérisé en ce que** la largeur de ladite bande de renfort de nappe de sommet (1) est comprise entre 8 et 15 mm.

9. Pneumatique à carcasse radiale ayant une bande de renfort de nappe de sommet (1) selon les revendications précédentes, **caractérisé en ce que** le nombre de chaînes (3) est compris entre 3 et 20, la largeur de la bande de renfort (3) étant de 10 mm.

10. Pneumatique à carcasse radiale ayant une bande de renfort de nappe de sommet (1) selon la revendication 9, **caractérisé en ce que** le degré de torsion du cordon de ladite chaîne (3) est compris entre 250 et 350 tpm.

11. Pneumatique à carcasse radiale ayant une bande de renfort de nappe de sommet (1) selon l'une quelconque des revendications précédentes, **caractérisé en ce que** les densités linéaires desdits fils de trame (2) sont comprises entre 1400 à 6000 dtex.

12. Pneumatique à carcasse radiale ayant une bande de renfort de nappe de sommet (1) selon l'une quelconque des revendications précédentes, **caractérisé en ce que** ledit fil de trame (2) est fabriqué à partir d'au moins un matériau choisi dans le groupe comprenant nylon 6.6, nylon 4.6, nylon 6, PET (polyéthylène téréphtalate), PEN (polyéthylène naphtalate) ou rayonne.

13. Pneumatique à carcasse radiale ayant une bande de renfort de nappe de sommet (1) selon l'une quelconque des revendications précédentes, **caractérisé en ce que** le nombre dudit fil de trame (2) est compris entre 5 à 50, dans ladite longueur de ladite bande de renfort (1) est de 10 cm.

14. Pneumatique à carcasse radiale ayant une bande de renfort de nappe de sommet (1) selon l'une quelconque des revendications précédentes, **caractérisé en ce que** lesdites chaînes (3) comprennent du nylon 6.6, du PET (polyéthylène téréphtalate), des cordons d'aramide ou des câbles hybrides PET-nylon 6.6, aramide-nylon 6.6 ou aramide-PET.
